# EUROPEAN PATENT SPECIFICATION

(11) **EP 3 107 755 B1**
(45) Date of publication and mention of the grant of the patent: **26.12.2018**
(21) Application number: 16718699.8
(22) Date of filing: 27.04.2016
(51) Int. Cl.: B60N 2/58

(54) **SECURING SEAT TRIM COVERS TO FOAM CUSHIONS**
FIXIERUNG VON SITZBEZÜGEN AN SCHAUMKISSEN
FIXATION DE HOUSSES DE GARNITURE DE SIÈGE SUR DES COUSSINS DE MOUSSE

(30) Priority: 27.04.2015 US 201461696730 P
(43) Date of publication of application: 28.12.2016
(73) Proprietor: VELCRO BVBA, 9800 Deinze (BE)
(72) Inventor: KHEIL, Victor Horst, Kitchener, Ontario N2C 2N1 (CA); VOIGT, Paul Joseph, Waterdown, Ontario L0R 2H3 (CA); CINA, Michael, Toronto, Ontario M9R 2A5 (CA); JANZEN, Daniel Lee, Brampton, Ontario L6X 4J7 (CA)
(74) Representative: Conroy, John
(86) International application number: PCT/EP2016/059372
(87) International publication number: WO 2016/174068

(56) References cited:
- DE-A1-102014 011 341
- US-A1- 2011 080 032

## Description

### TECHNICAL FIELD

This specification generally relates to securing seat trim covers to foam cushions.

### BACKGROUND

Seats for cars and light trucks have been formed by molding a foam bun that will serve as the seat cushion, and then attaching a pre-stitched fabric cover to the foam bun. Often, when the fabric cover is to be held securely to the foam bun along a bun contour, discrete fastenings, such as hog rings, are employed to connect a fabric flange, extending from the inner surface of the cover, to a wire retainer embedded at the bottom of a corresponding trench in the foam bun surface. Tension in the cover flange holds the cover against the bun in the contour. Other fastening methods involve fastening a clip, secured in the trench, to a bead along the flange edge.

Some fastening methods can be very labor-intensive, and can require significant manual dexterity. Some also require pneumatic tools for repetitive installations, due to the force required.

Improvements in the methods of attaching covers to contoured foam products are sought, either for contoured foam seat cushions or other applications

Document DE102014011341 discloses a method of securing a seat trim cover to a foam cushion, and a seat cushion cover comprising a flexible web and a plurality of clips.

### SUMMARY

This specification describes technologies related to systems, apparatus, and methods for securing seat trim covers to foam cushions.

In several aspects, the product and method of the invention features a plurality of clips spaced-apart at intervals along a distal edge of a web, such as for securing a seat trim cover to a retainer held in a foam seat cushion, with each of the clips having a base permanently molded to, or otherwise secured to, the web, and one or more latch elements extending from the base to a point beyond the distal edge of the web.

One aspect of the invention features a method of securing a seat trim cover to a foam cushion, the method including placing a flexible seat trim cover adjacent a foam bun having a foam body outlined by a contoured outer surface, the foam bun carrying an elongated cushion retainer, and forcing each of a plurality of clips spaced-apart at predetermined intervals along a distal edge of a web of the seat trim cover into engagement with the cushion retainer, thereby simultaneously fastening and aligning the seat trim cover to the foam bun. Each of the plurality of clips includes a clip base secured to the distal edge of the web and defining a tool retention feature, and an opposing pair of latch elements extending from the clip base beyond the distal edge of the web and defining therebetween a space for receiving the retainer. Forcing each of the plurality of clips into engagement with the retainer includes engaging the tool retention feature of the clip with a tool, and applying force to the engaged tool to force the clip into engagement with the retainer.

In some examples, the latch elements of the opposing pair are offset along the distal edge of the web. In such examples, and in some others, applying force to the engaged tool includes applying a torque to twist the clip with respect to the retainer.

According to the invention, the tool retention feature includes, or is in the form of, a tool retention aperture defined by the clip. The tool retention aperture may be in the form of an elongated slot, for example, such as for accepting a flat screwdriver blade.

In some cases the elongated slot is open along at least one side, such that a tool may be engaged by moving the tool laterally into the slot, in a direction perpendicular to a direction in which the clip is forced onto the retainer.

The aperture, such as an elongated slot, in some cases is defined in a laterally projecting boss of the clip base. In some applications, the tool retention aperture extends from an opening in a surface of the clip inboard of the distal edge of the web, such that the opening is disposed within a projected area of the web.

In some cases tool retention aperture extends through the clip between two openings, such as to enable a tool to be inserted through the aperture to bear on other structure, such as a back surface of one of the latch elements.

According to the invention the tool retention feature includes, or is in the form of, a tool retention projection sized to be received in a corresponding aperture of the tool. The corresponding aperture of the tool may feature or be in the form of a slot open on a lateral side of the tool, such that engaging the tool retention feature comprises sliding the tool onto the clip in a direction along the web.

The cushion retainer may be embedded in the foam bun beneath a floor of an elongated trench defined in the foam body, such that forcing the clips into engagement with the retainer includes pushing the latch elements beyond the floor of the trench.

In many applications, applying force to the engaged tool includes applying a torque to twist the clip with respect to the retainer, such as to twist the clip with respect to a plane of the web.

In some examples the web also includes a listing bead reinforcing the distal edge of the web, the listing bead having or being in the form of solidified resin material over-molded along the distal edge of the web between spaced apart clips.

Each clip may include, or be in the form of, resin overmolded onto the web edge.

Another aspect of the invention features a seat cushion cover with a flexible web and a plurality of clips spaced-apart at predetermined intervals along a lower edge of the web. Each of the clips has a clip base secured to the lower edge of the web, and an opposing pair of elastically deformable latch elements extending from the clip base beyond the lower edge of the web to snap about an elongated cushion retainer below the web. Each clip has an upwardly facing surface defining a tool retention aperture sized to receive a tool and positioned so as to enable transfer of an engaging force across the distal edge to push the latch elements over a cushion retainer.

Various examples of the seat cushion cover feature technical details of the clips discussed above with respect to the inventive method.

The tool retention aperture may be in the form of an elongated slot, such as a slot that extends from an opening in the upwardly facing surface, the opening having a width to length ratio of between 2 and 5.

The upwardly facing surface is, in some examples, disposed above the lower edge of the web.

In some embodiments the tool retention aperture extends through the clip between two openings. The tool retention aperture may be disposed above and aligned with an upper surface of one of the latch elements, for engagement of the upper latch element surface by a tool inserted through the aperture.

In some embodiments the web also has a listing bead reinforcing the distal edge of the web, the listing bead having, or being in the form of, solidified resin material over-molded along the distal edge of the web between spaced apart clips.

In some cases the tool retention aperture is stepped in at least one of length and width.

In some examples the tool retention aperture is defined in one of the latch elements.

The optional features noted above with respect to other seat trim covers of the invention are also applicable to various examples of this seat trim cover.

Various implementations of the invention can provide a means for quickly and effectively securing a cover to a foam cushion, by force applied with a simple tool that engages a corresponding feature of each clip. The features can be designed to enable quick, and even blind, engagement with the tool. The clips can be formed inexpensively along an edge of a web of the cover, such as by over-molding processes, and can be configured in an advantageous offset arrangement to ease installation, such as with a torque applied to the clip by the tool, while promoting retention of a cushion retainer once engaged.

The details of one or more implementations of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

Fig. 1A is a partial cutaway view of a portion of a covered foam seat cushion having an embedded retainer, during clip installation.
Fig. 1B is a partial cutaway view of a portion of a covered foam seat cushion having a molded bead retainer, following clip installation.
Fig. 2A is perspective view of an edge of a flexible web of a seat trim cover, showing a first clip configuration.
Fig. 2B is an end view of the flexible web edge of Fig. 2A.
Fig. 2C shows the flexible web of Fig. 2A coupled to a retainer.
Fig. 2D is a bottom perspective view of the web of Fig. 2A.
Figs. 3A through 3D illustrate a second clip configuration.
Fig. 3E shows the clip of Fig. 3A being twisted to engage a cushion retainer.
Figs. 4 and 5 are perspective views of an edge of a flexible web of a seat trim cover, showing third and fourth clip examples, respectively.
Fig. 6 is a perspective view of a fifth clip example.
Figs. 7A and 7B are perspective and end views, respectively, of a sixth clip example.
Figs. 7C and 7D illustrate two examples of tools for engaging the clip of Figs. 7A and 7B.

Like reference numbers and designations in the various drawings indicate like elements.

### DETAILED DESCRIPTION

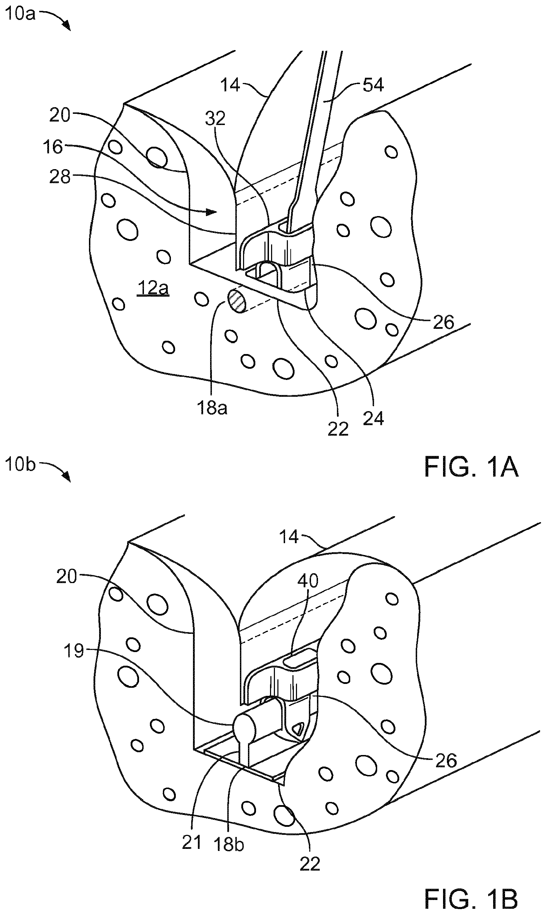

Referring first to Fig. 1A, a covered foam cushion 10a includes a foam bun 12a and a cover 14 extending over a contoured outer surface of the foam bun. The bun surface features an elongated trench 16 at which the cover 14 is held in place by a retainer 18a. In this example, retainer 18a is a metal wire embedded in the body of foam bun 12a beneath trench 16. Trench 16 is defined by two opposing side walls 20 and a floor 22 spanning the distance between the side walls. In this example, the opposing trench side walls are parallel with each other and perpendicular to the trench floor. However, other trench geometries are also envisioned and compatible with the concepts discussed herein. The trench is positioned with respect to the bun contour such that holding the cover tight against the bun at the trench helps to hold the cover tight against the rest of the contour of the foam bun. In this example, the foam cushion is designed for an automotive seat. However, the concepts described in the present disclosure are not so limited, and are suitable for various other applications.

Retainer 18a is exposed to the open area of trench 16 along a series of spaced-apart openings 24 along the trench floor 22. A series of discrete clips 26 cooperate with retainer 18a to secure cover 14 to foam bun 12a. Clips 26 are secured to a flexible web (or "flange") 28 of cover 14 extending down into trench 16. Clips 26 extend beyond a distal edge of the flange and are aligned with openings 24, through which the clips extend to clip onto retainer 18a. As described below, the clips feature an opposing set of latch elements located on either side of the retainer and connected by a clip body 32 secured to the flange.

As noted above and shown in the figures, the clips described herein are provided as a series of discrete clips spaced-apart along the length of the cover flange. In many examples, each clip in the series is substantially identical in size and shape to the other clips in the series. However, it is appreciated that some applications may feature different types of clips. The spacing of the clips helps to maintain the flexibility of the flange, such as for following a curved trench in the foam bun. The clips are of an appropriate size and shape to be easily manipulated by a human installer using a simple tool. For example, the clips may be spaced along the flange with a spacing of about 50 to 200 mm between neighboring clips, with each clip having an overall length of about 10 to 30 mm in the same direction. The ratio of clip spacing to clip length is determined so as to provide a reasonably continuous connection between the cover and the foam bun, resulting in a smooth seam line, while maintaining flexibility in the flange. In some examples, the ratio of clip spacing to clip length is between 2:1 and 8:1. The number of clips and the length interval gap between clips can vary between different applications. As a practical consideration, when the retainer is embedded in the foam bun below the trench, the placement of the clips should match the spacing of the openings that expose the retainer. In some cases the clips are sufficiently stiff to be pushed into the foam to clip about the retainer, in the absence of any opening.

Fig. 1B shows a covered foam cushion 10b similar to the foam cushion 10a, including a foam bun 12b and a cover 14. In this example, the cover 14 is held in place by a retainer 18b permanently secured to foam bun 12b along the floor 22 of trench 16 and extending upward from the trench floor. Retainer 18b features a bulbous head 19 extending along the trench, supported on a narrow stem 21 and disposed between the trench side walls. The latch elements of clips 26 are secured about the head of the retainer.

While retainer 18b may be secured within trench 16 by any number of suitable methods, one method understood in the art is to secure the retainer to the foam as the foam is formed, such as by insert-molding the retainer in place. Such methods are described, for example, U.S. Patent No. 7,971,325. The secured retainer may be, for example, partially embedded in foam of the seat bun, and may include projections (not shown) extending below the surface of the foam. To aid in holding the retainer in place during foaming, the retainer may include a magnetically attractable element, such as a magnetically attractable wire (not shown) extending along its length, or a magnetic attractant additive molded into the retainer, to hold the retainer in place by a magnet embedded in a mold in which the foam bun is formed.

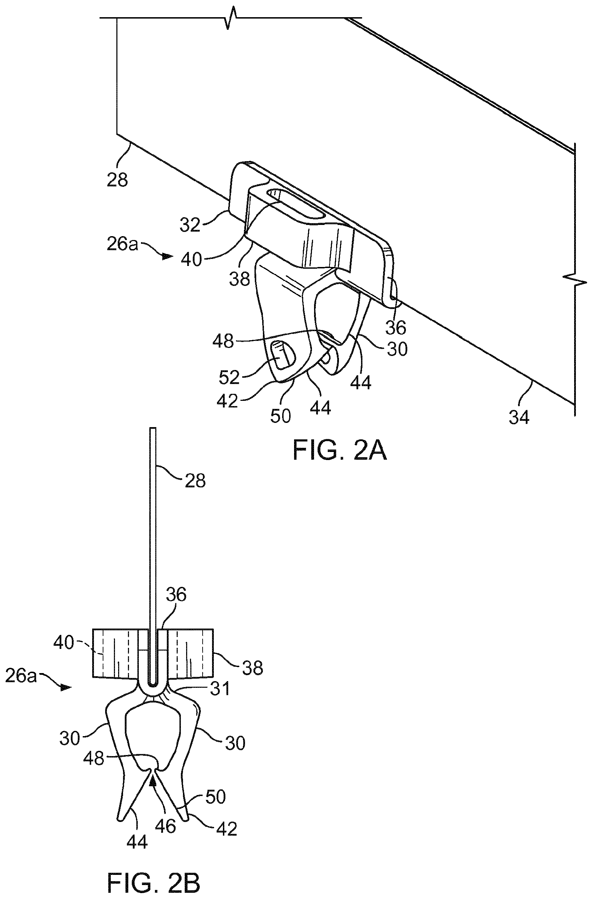

Referring next to Figs. 2A-2D, a first example of a clip 26 (26a) has a clip base 32 integrally molded of resin with a pair of opposing latch elements 30 molded with the clip base and connected to the base by molded elastic hinges 31. The clip is over-molded onto the distal edge 34 of the cover flange 28. The rigid molded bases are spaced-apart from one another along the length of the flexible cover flange, leaving sections of free distal edge 34 exposed between them. The material of the cover flange between the clips allows each clip to be separately manipulated for engagement with the retainer, including by twisting the clip about an axis within the plane of the flange and perpendicular with edge 34.

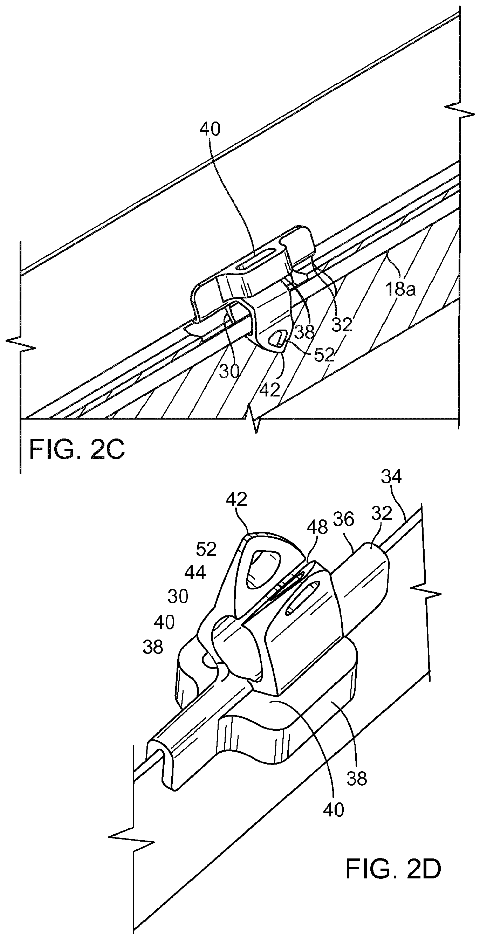

In this example, the clip base 32 forms a base layer 36 extending along opposite sides of the cover flange, about edge 34. Molded bosses 38 on either side of the clip base extend outwardly from the base layer to define tool capture apertures 40 in the form of elongated slots extending completely through their respective bosses, as seen in Fig. 2D. The clip also includes opposed latch elements 30, each extending from a central portion of the base layer beyond edge 34 to distal tips 42. The latch elements are shaped to have opposed cam surfaces 44 defining between them a narrow throat 46 between opposing shoulders 48. The cam surfaces beyond the throat are slanted away from each other to define an entrance ramp 50 that engages the retainer for elastically forcing the latch elements away from each other to 'snap' the clip onto the retainer, such as shown in Fig. 2C. Preferably, the elasticity and contour of the latch elements is sized with respect to a given retainer such that snapping the clip onto the retainer produces both a tactile and an audible feedback to confirm engagement. The profile of the cam surfaces above shoulders 48 is chosen to securely clamp the retainer in use. Each tip 42 is generally pointed in each of two orthogonal perspectives, to aid in piercing foam for those applications in which the retainer is not exposed by openings in the seat cushion. Each latch element 30 defines a hole 52 through the latch element beyond shoulder 48, to effectively reduce friction load against the retainer during engagement. A similar effect may be obtained by similarly sized depressions in the cam surfaces.

Tool capture apertures 40 are shown as elongated slots extending between openings at top and bottom of the bosses. The openings may have flat parallel sides connected by semicircular ends, and may have an overall length of between 3 mm and 20 mm (for example, 8 mm) and a width of between 0.5 mm and 10 mm (for example, 2 mm). The slots may extend a distance between the openings of at least 1 to 8 mm. Preferably the overall length of the slot is at least 2 to 5 times the width of the slot. This configuration of tool capture aperture is selected to be compatible with a typical flat-bladed screwdriver of moderate size, such that the tapered sides of the inserted screwdriver bear against opposed flat surfaces on either side of the slot within the boss, and allow the entire clip to be manipulated by movement of the engaged screwdriver blade, either for translation or for twisting about the screwdriver shaft, as will be discussed below. With the slots extending all the way through the bosses just above the upper surfaces of the latch elements, the slots may be sized to allow the tip of a screwdriver to bear against the outer surface of the latch element, such as for pushing the clip down over the retainer. Fig. 1A shows a screwdriver 54 as a representative tool, engaged in the clip for clip manipulation during installation.

The clips described herein may be formed of a durable thermoplastic resin, and may be formed by molding them directly onto the fabric flange. As one example, an injection molding process can be used to mold the clips to the flange. The injection molding process and apparatus may resemble those used to manufacture plastic zipper tape. In this case, the distal edge of the flange is inserted into a mold cavity defining, together with any necessary slides, the negative shape of a clip, the mold cavity is sealed, and molten thermoplastic resin is injected through an injection pipe into the sealed mold cavity. The flange is released from the mold cavity once the resin has at least partially solidified and is able to hold the molded shape of the latch elements. The resin may be relatively stiff so as to securely clasp the retainer to hold the seat trim cover in place. Examples of resins from which the latch elements can be formed include polypropylene (PP), polyamide (PA), polybutylene teraphthalate (PBT), polycarbonate/acrylonitrile butadiene styrene (PC/ABS), polyoxymethylene (POM) or filled versions of these thermoplastics (e.g., talc-filled, glass-filled, etc.).

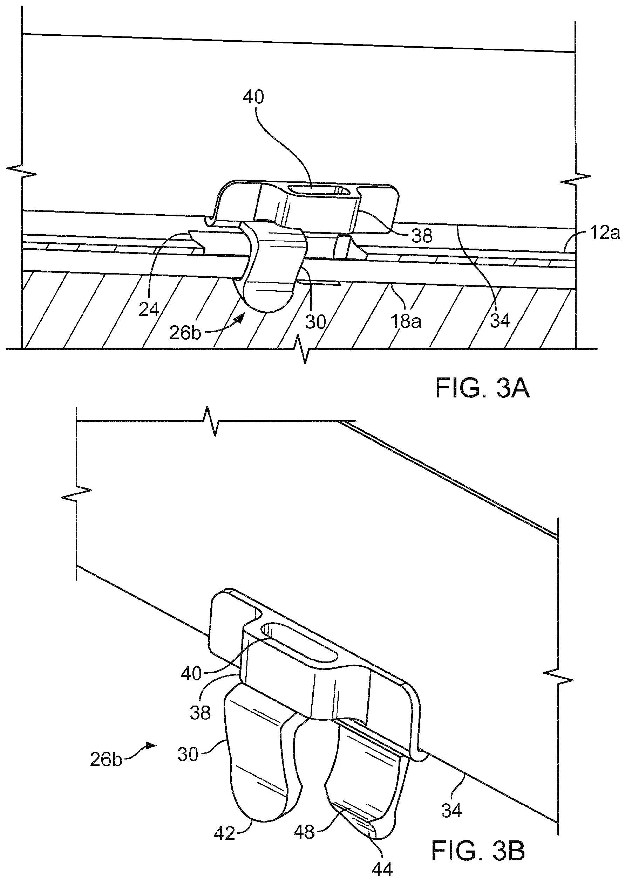

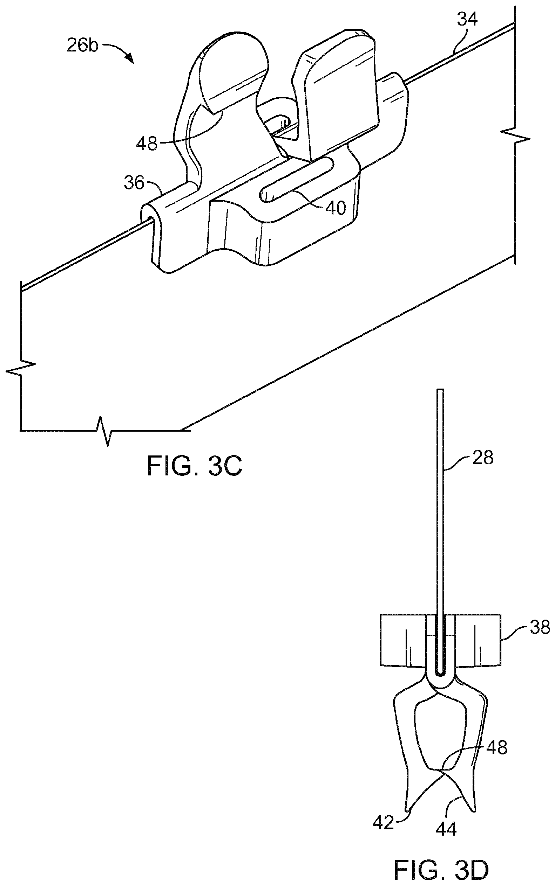

Referring next to Figs. 3A-3D, a second example of a clip 26 (26b) has a clip base 32 integrally molded of resin with a pair of opposing latch elements 30 offset from one another along the length of the flange. As seen in the end view of Fig. 3D, the cam surfaces of the latch elements are shaped to have a slight lateral overlap at shoulders 48. As shown in Fig. 3B and 3D, latch element tips 42 are generally rounded in side view and pointed in end view, and the latch elements are solid in the region beyond shoulder 48. Clip 26b is otherwise identical to clip 26a discussed above.

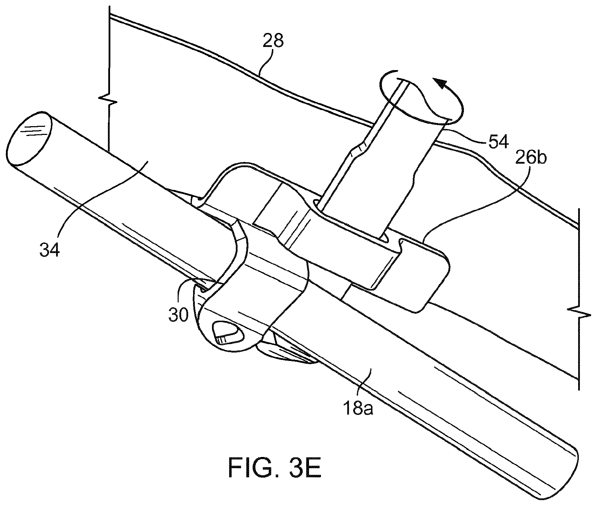

The offset of the latch elements of clip 26b enables the installation force to be lessened by twisting the clip as it is snapped over the retainer. For example, Fig. 3E shows torque being applied to an inserted tool 54 to twist the clip to reduce the amount of elastic latch element deformation required to snap the clip over retainer 18b. Once the clip is in place, the torque is relaxed and the clip and flange return to the orientation as shown in Fig. 3A. The twisting of each clip is aided by the flexibility of flange 28.

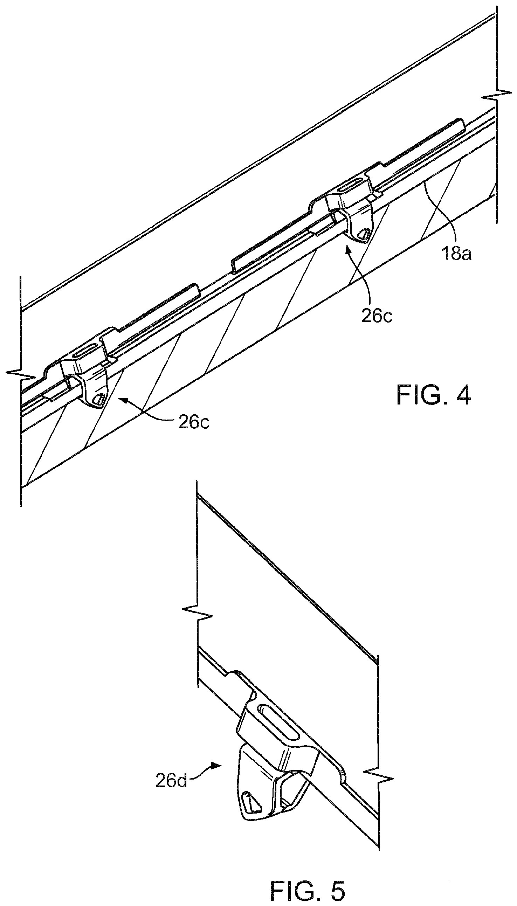

The bases of the clips may be modified to cover different proportions of the free edge of the flange. Longer clip bases can provide extra rigidity to the flange edge, which may be desirable along straight seams, for example. Fig. 4 shows clips 26c that are identical to clips 26a described above, except that the clip bases extend much farther along the length of the flange. Similarly, clip 26d in Fig. 5 is an integral part of a clip base that extends along the entire length of the flange and is provided with a number of spaced clips 26d and forms a listing bead along the flange edge. The short spaces between adjacent clip bases in the configuration of Fig. 4 function as discrete hinge points to allow individual clips to be twisted out of the plane of the web, effectively functioning as hinges along the web. Similarly, the continuous base of Fig. 5 can be provided with discrete regions of relatively thinner resin.

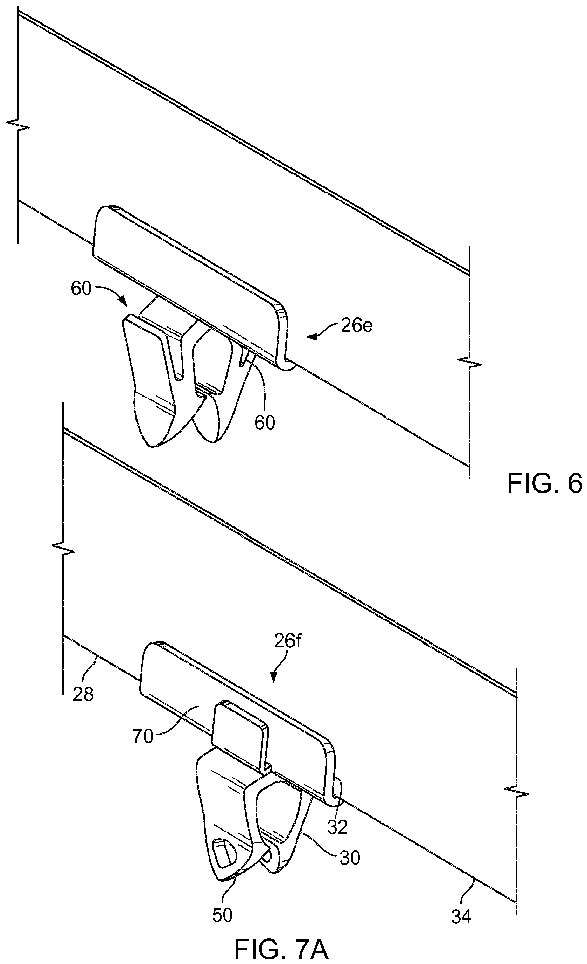

The clips of Figs. 2A-5 feature tool capture apertures in the form of slots that are surrounded by material of the clips and extend completely through the bosses. However, other shapes of tool capture apertures are envisioned. For example, the clips may be molded such that the slots are 'blind' in that they do not extend all the way through the bosses but extend from openings in the upper surfaces of the bosses to aperture floors against which a tool may press to push the clip into engagement. For applications where twisting of the clips is planned, such blind slots should extend into the clips a significant distance, such as at least twice the width of the slot, so as to retain the tool during twisting. The tool capture aperture may be tapered in width and/or length more than necessary for molding, such as to mate with a tapered tool blade. The width and/or length of the aperture may be stepped, such that an upper portion of the aperture is larger than a lower portion, for receiving tool blades of multiple discrete sizes. While the apertures have been illustrated as rectangular slots, other shapes are envisioned, such as x-shaped slots for receiving a Phillips-style bit, or a round, hexagonal hole or star-shaped hole for use with an axisymmetric tool of a mating shape. Unique aperture shapes can be provided, to mate with tools specifically designed for this purpose. In other cases the clips have tool capture features that are not enclosed apertures but are gaps or spaces defined between clip surfaces and sized to receive, and be manipulated by, a given tool. For example, Fig. 6 shows a clip 26e in which the tool capture feature is in the form of an open slot 60 defined in an outside or back portion of each clip latch element and open upward so as to receive a tool, such as a narrow blade of a screwdriver, inserted from above the clip. By force exerted via the screwdriver blade, the overall clip can be forced downward over the retainer. In addition, to release the clip individual latch element engaged by the screwdriver blade can be manipulated outward to open the clip. Similar slots may be provided on both sides of the clip. In this example, the base is a relatively thin layer of molded plastic and does not feature an outwardly extending boss, thereby providing access to slots 60.

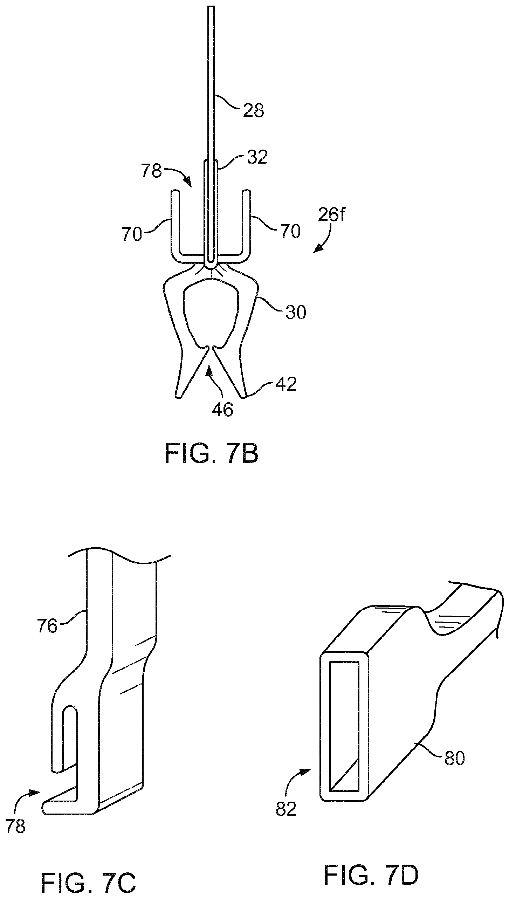

In the clip 26f of Figs. 7A and 7B, each side of the base is provided with an angled projection 70. The projection extends upward to define, together with an opposing surface of the base, a slot that is open upward and on both ends. Figs. 7C and 7D show two examples of tools that can be used to engage and manipulate clip 26f of Figs. 7A and 7B. The tool 76 of Fig. 7C defines a slot 78 running the width of the tool (or open on at least one side of the tool) and of a complementary shape to projection 70, such that the tool can be slid over the projection in a direction running the length of the clip. Once engaged, tool 76 can be manipulated to lift or lower clip 26f as needed, as well as twisted to apply torque to the clip. The tool 80 of Fig. 7D defines a blind slot 82 extending upward into the tool and sized to receive the vertical portion of projection 70 of the clip 26f of Figs. 7A and 7B. Engaged, tool 80 can be manipulated to push clip 26f into engagement on a retainer, and can be twisted to apply torque to the clip, but is not able to apply an upward force to the clip. In both examples, the tool capture feature is in the form of a projection extending upwardly from the clip and sized to be received in an aperture of a tool. In such a case, the projection preferably has a cross-section profile through which torque can be imparted to the clip by the tool.

The illustrated examples feature clips with latch elements that are substantially identical or very similar to one another. However, in some other examples (not shown), the latch elements have different cam surface profiles. One profiled latch element may even be pared with a straight (non-profiled) latch element, so long as together the latch elements are designed to retain the clip to the retainer.

A number of embodiments of the invention have been described. Nevertheless, it will be understood that various modifications may be made without departing from the scope of the invention as long as they fall within the scope of the claim.

## Claims

1. A method of securing a seat trim cover to a foam cushion, the method comprising:
placing a flexible seat trim cover (14) adjacent a foam bun (12) having a foam body outlined by a contoured outer surface, the foam bun carrying an elongated cushion retainer (18); and
forcing each of a plurality of clips (26) spaced-apart at predetermined intervals along a distal edge (34) of a web (28) of the seat trim cover into engagement with the cushion retainer, thereby simultaneously fastening and aligning the seat trim cover to the foam bun,
wherein each of the plurality of clips comprises
a clip base (32) secured to the distal edge of the web and defining a tool retention feature, wherein the tool retention feature comprises a tool retention aperture (40) defined by the clip [claim 3], and
an opposing pair of latch elements (30) extending from the clip base beyond the distal edge of the web and defining therebetween a space for receiving the retainer; and
wherein forcing each of the plurality of clips into engagement with the retainer comprises
engaging the tool retention feature of the clip with a tool; and
applying force to the engaged tool to force the clip into engagement with the retainer.

2. The method of claim 1, wherein the tool retention aperture is in the form of an elongated slot.

3. The method of claim 2, wherein the elongated slot is open along at least one side.

4. The method of claim 1, wherein the tool retention aperture extends through the clip between two openings.

5. The method of claim 1, wherein the cushion retainer is embedded in the foam bun beneath a floor of an elongated trench defined in the foam body, such that forcing the clips into engagement with the retainer comprises pushing the latch elements beyond the floor of the trench.

6. The method of claim 1, wherein applying force to the engaged tool includes applying a torque to twist the clip with respect to the retainer.

7. A seat cushion cover comprising:
a flexible web (28); and
a plurality of clips (26) spaced-apart at predetermined intervals along a lower edge of the web, each of the clips comprising:
a clip base (32) secured to the lower edge of the web, and
an opposing pair of elastically deformable latch elements (30) extending from the clip base beyond the lower edge of the web to snap about an elongated cushion retainer (18) below the web;
wherein each clip has an upwardly facing surface defining a tool retention aperture (40) sized to receive a tool (54) and positioned so as to enable transfer of an engaging force across the distal edge (34) to push the latch elements over a cushion retainer.

8. The method of claim 1 or the seat cushion cover of claim 7, wherein the latch elements of the opposing pair are offset along the distal edge of the web.

9. The seat cushion cover of claim 7, wherein the tool retention aperture is in the form of an elongated slot.

10. The seat cushion cover of claim 9, wherein the slot extends from an opening in the upwardly facing surface, the opening having a width to length ratio of between 2 and 5.

11. The seat cushion cover of claim 7, wherein the upwardly facing surface is disposed above the lower edge of the web.

12. The seat cushion cover of claim 7, wherein the tool retention aperture extends through the clip between two openings.

13. The seat cushion cover of claim 12, wherein the tool retention aperture is disposed above and aligned with an upper surface of one of the latch elements, for engagement of the upper latch element surface by a tool inserted through the aperture.

14. The method of claim 1 or the seat cushion cover of claim 7, wherein the web further comprises a listing bead reinforcing the distal edge of the web, the listing bead comprising solidified resin material over-molded along the distal edge of the web between spaced apart clips.

15. The method of claim 1 or the seat cushion cover of claim 7, wherein each clip comprises resin overmolded onto the web edge.

16. The seat cushion cover of claim 7, wherein the tool retention aperture is stepped in at least one of length and width.

17. The seat cushion cover of claim 7, wherein the tool retention aperture is defined in one of the latch elements.

## Patentansprüche

1. Verfahren zum Befestigen eines Sitzbezugs an einem Schaumstoffkissen, wobei das Verfahren umfasst:
Anordnen eines flexiblen Sitzbezugs (14) angrenzend an einen Schaumstoffblock (12), der einen Schaumstoffkörper aufweist, der durch eine konturierte Außenfläche umrandet ist, wobei der Schaumstoffblock eine langgestreckte Kissenhalterung (18) trägt; und
Pressen von jeder der mehreren Klammern (26), die in vorbestimmten Abständen entlang einer distalen Kante (34) eines Steges (28) des Sitzbezugs voneinander beabstandet sind, in den Eingriff mit der Kissenhalterung, wodurch gleichzeitig der Sitzbezug an dem Schaumstoffblock befestigt und ausgerichtet wird,
wobei jede der mehreren Klammern umfasst
eine Klammerbasis (32), die an der distalen Kante des Steges befestigt ist und ein Werkzeughalteelement definiert, wobei das Werkzeughalteelement eine durch die Klammer definierte Werkzeughalteöffnung (40) umfasst, und
ein gegenüberliegendes Paar von Verriegelungselementen (30), die sich von der Klammerbasis über die distale Kante des Steges hinaus erstrecken und dort dazwischen einen Raum zur Aufnahme der Kissenhalterung definieren; und
wobei das Pressen von jeder der mehreren Klammern in den Eingriff mit der Kissenhalterung umfasst
Eingreifen des Werkzeughalteelements der Klammer in ein Werkzeug; und
Aufbringen von Kraft auf das in Eingriff gebrachte Werkzeug, um die Klammer in Eingriff mit der Kissenhalterung zu bringen.

2. Verfahren nach Anspruch 1, wobei die Werkzeughalteöffnung (40) in Form eines langgestreckten Schlitzes ausgebildet ist.

3. Verfahren nach Anspruch 2, wobei der langgestreckte Schlitz entlang von mindestens einer Seite offen ist.

4. Verfahren nach Anspruch 1, wobei sich die Werkzeughalteöffnung (40) durch die Klammer zwischen zwei Öffnungen erstreckt.

5. Verfahren nach Anspruch 1, wobei die Kissenhalterung (18) in dem Schaumstoffblock unter einem Boden eines in dem Schaumstoffkörper definierten langgestreckten Einschnitts derart eingebettet ist, dass das Pressen der Klammern in den Eingriff mit der Kissenhalterung das Drücken der Verriegelungselemente über den Boden des Einschnitts hinaus umfasst.

6. Verfahren nach Anspruch 1, worin das Aufbringen von Kraft auf das in Eingriff stehende Werkzeug das Aufbringen eines Drehmoments zum Verdrehen der Klammer in Bezug auf die Kissenhalterung (18) umfasst.

7. Sitzkissenbezug, umfassend:
einen flexiblen Steg (28); und
mehrere Klammern (26), die in vorbestimmten Abständen entlang einer Unterkante des Steges voneinander beabstandet sind, wobei jede der Klammern umfasst:
eine Klammerbasis (32), die an der Unterkante des Steges befestigt ist, und
ein gegenüberliegendes Paar elastisch verformbarer Verriegelungselemente (30), die sich von der Klammerbasis über die Unterkante der Steg hinaus erstrecken, um unterhalb des Steges um eine langgestreckte Kissenhalterung (18) herum einzurasten;
wobei jede Klammer eine nach oben gerichtete Fläche aufweist, die eine Werkzeughalteöffnung (40) definiert, die so bemessen ist, dass sie ein Werkzeug (54) aufnimmt und so positioniert ist, dass sie die Übertragung einer Eingriffskraft über die distale Kante (34) ermöglicht, um die Verriegelungselemente (30) über eine Kissenhalterung zu drücken.

8. Verfahren nach Anspruch 1 oder der Sitzkissenbezug nach Anspruch 7, wobei die Verriegelung (30) des gegenüberliegenden Paares entlang der distalen Kante des Steges versetzt ist.

9. Sitzkissenbezug nach Anspruch 7, wobei die Werkzeughalteöffnung (40) in Form eines langgestreckten Schlitzes ausgebildet ist.

10. Sitzkissenbezug nach Anspruch 9, wobei sich der Schlitz von einer Öffnung in der nach oben gerichteten Fläche erstreckt, wobei die Öffnung ein Breiten/Längenverhältnis zwischen 2 und 5 aufweist.

11. Sitzkissenbezug nach Anspruch 7, wobei die nach oben gerichtete Fläche oberhalb der Unterkante des Steges angeordnet ist.

12. Sitzkissenbezug nach Anspruch 7, wobei sich die Werkzeughalteöffnung (40) durch die Klammer zwischen zwei Öffnungen erstreckt.

13. Sitzkissenbezug nach Anspruch 12, wobei die Werkzeughalteöffnung (40) oberhalb einer Oberseite von einem der Verriegelungselemente angeordnet und mit dieser ausgerichtet ist, zum Eingriff der Verriegelungselementoberseite mit einem die Öffnung eingeführten Werkzeug.

14. Verfahren nach Anspruch 1 oder der Sitzkissenbezug nach Anspruch 7, wobei der flexible Steg ferner ein Verstärkungsteil umfasst, das die distale Kante des Steges verstärkt, wobei das Verstärkungsteil ein verfestigtes Harzmaterial umfasst, das entlang der distalen Kante des Steges zwischen beabstandeten Klammern aufgeformt ist.

15. Verfahren nach Anspruch 1 oder Sitzkissenbezug nach Anspruch 7, worin jede Klammer Harz umfasst, das auf die Stegkante aufgeformt ist.

16. Sitzkissenbezug nach Anspruch 7, wobei die Werkzeughalteöffnung (40) in ausführlich einer von Länge und Breite abgestuft ist.

17. Sitzkissenbezug nach Anspruch 7, wobei die Werkzeughalteöffnung (40) in einem der Verriegelungselemente definiert ist.

## Revendications

1. Procédé de fixation d'une housse de garniture de siège sur un coussin de mousse, le procédé consistant à:
placer une housse de garniture de siège flexible (14) adjacente à une masse en mousse (12) ayant un corps en mousse délimité par une surface extérieure profilée, la masse en mousse portant un support de coussin allongé (18); et
forcer chacun d'une pluralité d'attaches (26) espacées à des intervalles prédéterminés le long d'un bord distal (34) d'une bande (28) de la housse de garniture de siège en engagement avec le dispositif de retenue du coussin, ce qui permet de fixer et d'aligner simultanément la housse de garniture de siège sur la masse en mousse,
chacune de la pluralité d'attaches comprenant
une base d'attache (32) fixée au bord distal de la bande et définissant un dispositif de retenue d'outil, dans lequel le dispositif de retenue d'outil comprend une ouverture de retenue d'outil (40) définie par l'attache et une paire opposée d'éléments de verrouillage (30) s'étendant à partir de la base d'attache au-delà du bord distal de la bande et définissant entre eux un espace pour recevoir le dispositif de retenue du coussin; et
forcer chacun de la pluralité d'attaches en prise avec le dispositif de retenue du coussin comprend les éléments suivants :
l'engagement de la caractéristique de retenue de l'outil de l'attache avec un outil; et
l'application d'une force à l'outil engagé pour forcer l'attache à s'engager avec le dispositif de retenue du coussin.

2. Procédé selon la revendication 1, dans lequel l'ouverture de retenue de l'outil (40) se présente sous la forme d'une fente allongée.

3. Procédé selon la revendication 2, dans lequel la fente allongée est ouverte le long d'au moins un côté.

4. Procédé selon la revendication 1, dans lequel l'ouverture de retenue d'outil (40) s'étend à travers l'attache entre deux ouvertures.

5. Procédé selon la revendication 1, dans lequel le dispositif de retenue de coussin (18) est incorporé dans la masse en mousse sous un plancher d'une tranchée allongée définie dans le corps en mousse, de telle sorte que forcer les attaches en prise avec le dispositif de retenue de coussin comprend le fait de pousser les éléments de verrouillage au-delà du plancher de la tranchée.

6. Procédé selon la revendication 1, dans lequel l'application d'une force à l'outil engagé comprend l'application d'un couple pour tordre l'attache par rapport au dispositif de retenue de coussin (18).

7. Housse de coussin de siège comprenant:
une bande souple (28); et
une pluralité d'attaches (26) espacées à intervalles prédéterminés le long d'un bord inférieur de la bande, chacune des attaches comprenant:
une base d'attache (32) fixée au bord inférieur de la bande, et
une paire opposée d'éléments de verrouillage (30) élastiquement déformables s'étendant depuis la base d'attache au-delà du bord inférieur de la bande pour s'enclencher autour d'un support de coussin allongé (18) sous la bande;
chaque attache ayant une surface tournée vers le haut définissant une ouverture de retenue d'outil (40) dimensionnée pour recevoir un outil (54) et positionnée de manière à permettre le transfert d'une force d'engagement à travers le bord distal (34) pour pousser les éléments de verrouillage (30) sur un dispositif de retenue de coussin.

8. Procédé selon la revendication 1 ou housse de coussin de siège selon la revendication 7, où l'élément de verrouillage (30) de la paire opposée est décalé le long du bord distal de la bande.

9. Housse de coussin de siège selon la revendication 7, dans laquelle l'ouverture de retenue d'outil (40) se présente sous la forme d'une fente allongée.

10. Housse de coussin de siège selon la revendication 9, dans laquelle la fente s'étend à partir d'une ouverture dans la surface tournée vers le haut, l'ouverture ayant un rapport largeur/longueur compris entre 2 et 5.

11. Housse de coussin de siège selon la revendication 7, dans laquelle la surface tournée vers le haut est disposée au-dessus du bord inférieur de la bande.

12. Housse de coussin de siège selon la revendication 7, dans laquelle l'ouverture de retenue d'outil (40) s'étend à travers l'attache entre deux ouvertures.

13. Housse de coussin de siège selon la revendication 12, dans laquelle l'ouverture de retenue d'outil (40) est disposée au-dessus et alignée avec une surface supérieure de l'un des éléments de verrouillage, pour l'engagement de la surface supérieure de l'élément de verrouillage par un outil inséré à travers l'ouverture.

14. Procédé selon la revendication 1 ou housse de coussin de siège selon la revendication 7, où la bande flexible comprend en outre un cordon de lisière renforçant le bord distal de la bande, le cordon de lisière comprenant un matériau de résine solidifiée surmoulée le long du bord distal de la bande entre des attaches espacées l'une de l'autre.

15. Procédé selon la revendication 1 ou housse de coussin de siège selon la revendication 7, où chaque attache comprend de la résine surmoulée sur le bord de la bande.

16. Housse de coussin de siège selon la revendication 7, dans laquelle l'ouverture de retenue d'outil (40) est échelonnée en longuement une parmi la longueur et la largeur.

17. Housse de coussin de siège selon la revendication 7, dans laquelle l'ouverture de retenue d'outil (40) est définie dans l'un des éléments de verrouillage.
